# NEUE EUROPÄISCHE PATENTSCHRIFT

(11) **EP 2 531 726 B2**
(45) Veröffentlichungstag und Bekanntmachung des Hinweises auf die Entscheidung über den Einspruch: **17.10.2018**
(45) Hinweis auf die Patenterteilung: 11.11.2015
(21) Anmeldenummer: 11703124.5
(22) Anmeldetag: 25.01.2011
(51) Int. Cl.: F03D 11/04, F03D 11/00, H02B 13/025

(54) **SCHALTANLAGE, INSBESONDERE SCHALTANLAGE FÜR EINE OFFSHORE-WINDENERGIEANLAGE**
SWITCHGEAR, IN PARTICULAR SWITCHGEAR FOR AN OFFSHORE WIND TURBINE
APPAREILLAGE DE COMMUTATION, EN PARTICULIER APPAREILLAGE DE COMMUTATION POUR ÉOLIENNE EN MER

(30) Priorität: 05.02.2010 DE 102010007136
(43) Veröffentlichungstag der Anmeldung: 12.12.2012
(73) Patentinhaber: ABB Schweiz AG, 5400 Baden (CH)
(72) Erfinder: BECKER, Marco, 68259 Mannheim (DE); KÄMPFER, Stefan, 68167 Mannheim (DE)
(74) Vertreter: Schmidt, Karl Michael
(86) Internationale Anmeldenummer: PCT/EP2011/000294
(87) Internationale Veröffentlichungsnummer: WO 2011/095291

(56) Entgegenhaltungen:
- DE-A1- 10 310 036
- DE-A1-102004 061 391
- DE-U1- 29 514 653
- DE-U1- 29 913 680
- DE-U1-202005 003 425
- US-A1- 2004 114 289
- RULES AND GUIDELINES, GERMANISCHER LLOYD, INDUSTRIAL SERVICES, EDITION 2005 2005,

## Beschreibung

Die Erfindung betrifft Mittelspannungsschaltanlagen, insbesondere Mittelspannungsschaltanlagen zur Realisierung einer Lasttrennung für Offshore-Windenergieanlagen.

Bei bisherigen Offshore-Windparks werden häufig die einzelnen Windenergieanlagen durch einfache Seekabel miteinander verbunden. Dies hat den Nachteil, dass sich einzelne Kabelstrecken innerhalb eines Mittelspannungsnetzes zwischen einzelnen Anlagen großer Windparks nicht heraustrennen lassen. Durch den Einsatz von Lasttrennern in jeder Windenergieanlage kann erreicht werden, dass einzelne Windenergieanlagen von dem Mittelspannungsnetz getrennt werden können. Darüber hinaus weisen die Windenergieanlagen in der Regel Leistungsschalter auf, um die Energieeinspeisung der Windenergieanlagen ins Mittelspannungsnetz zu steuern.

Derartige Schaltanlagen (Mittelspannungsschaltanlagen) sind in der Regel in einem Metallschrank bzw. Gehäuse vorgesehen, der die Lasttrenner und die Leistungsschalter gasdicht abschließt. Z.B. in einem Fehlerfall können sich bei solchen Mittelspannungsschaltanlagen Störlichtbögen ausbilden, die das Isoliergas erhitzen und zu hohen Temperaturen und hohen Drücken führen. Ursachen für die Entstehung von Störlichtbögen können unter anderem Isolationsversagen, Überspannungen oder Fehlbedienungen des Personals sein. Die Störlichtbögen sowie die daraus entstehenden heißen, unter Umständen toxischen Gase stellen ein hohes Risiko für sich im Umfeld der Schaltanlage aufhaltende Personen, sowie für die Schaltanlage selbst dar.

Metallgekapselte Schaltanlagen können zwar mehreren hundert mbar Überdruck widerstehen. Höhere Innendrücke können aber zu Beschädigungen führen. Aus diesen Gründen benötigen derartige Mittelspannungsschaltanlagen eine Möglichkeit zur Druckentlastung aus dem Inneren des Gehäuses in die Umgebung der Schaltanlage. Dazu ist in der Regel in dem Metallschrank bzw. Gehäuse der Schaltanlage eine Berstscheibe, eine Druckentlastungsklappe oder ähnliches sowie ggf. eine Absorbereinrichtung vorgesehen, die sich in einer seitlichen oder rückwärtigen Gehäusewand oder an der Oberseite des Gehäuses befinden.

Werden derartige Mittelspannungsschaltanlagen in einer Windkraftanlage eingesetzt, sind bislang zwei Möglichkeiten bekannt, die Druckentlastung durchzuführen. In einem ersten Fall findet die Druckentlastung durch die Mittelspannungsschaltanlage in das Innere eines Turms der Windkraftanlage statt. Sich im Turminneren befindliche Personen können dadurch gefährdet werden und nach einem Störlichtbogenfall ist in der Regel eine Reinigung des Turminneren notwendig, um Rückstände der u.U. toxischen Zersetzungsprodukte zu entfernen. Befinden sich dort weitere Geräte und sind diese nicht gasdicht von der Atmosphäre des Turminneren separiert, verteilen sich die im Störlichtbogenfall entstehenden Gase und Zersetzungsprodukte auch in diesen Geräten, so dass ein zusätzlicher Reinigungsaufwand die Folge ist. Je nach Kontaminierungsgrad der Atmosphäre im Inneren des Turms kann es zudem notwendig sein, dass Personen nur in Schutzkleidung den Turm betreten dürfen, was einen zusätzlichen Aufwand für die Wiederinbetriebnahme darstellt.

Eine weitere Möglichkeit zur Druckentlastung besteht darin, dass die im Störlichtbogenfall entstehenden Gase und Zersetzungsprodukte in einem Kanal gesammelt werden und dann durch die Außenwand des Turms der Windenergieanlage in die äußere Umgebung abgeleitet werden. Die Öffnung in der Außenwand des Turms stellt jedoch eine unerwünschte mechanische Schwächung der Struktur dar. Weiterhin besteht eine Schwierigkeit darin, das Außenklima in der Umgebung des Turms vom Innenraum des Turms bzw. vom Inneren des Gehäuses der Schaltanlage abzuschotten. Insbesondere ergeben sich Probleme durch das Eindringen von Feuchtigkeit vor allem an der Druckentlastungsvorrichtung, die die Trennung zwischen dem Außenklima und dem Innenraum des Gehäuses der Schaltanlage bildet. Dadurch ist die Druckentlastungsvorrichtung bei Offshore-Windenergieanlagen dauerhaft einem aggressiven Seeklima ausgesetzt, so dass die Bauteile der Druckentlastungsvorrichtung korrosionsgefährdet sind.

Beispielsweise ist aus der EP 0 620 626 A1 eine Schaltzellenanordnung für Mittelspannungsschaltanlagen bekannt, bei der deckenseitig durch verschwenkbar gelagerte Druckentlastungsklappen eine Druckentlastung bei einer Störung in einer der Zellen ausgelöst werden kann, um die unter Druck stehenden Gase in eine Umgebung der Schaltanlage abzuführen.

Auch aus der Druckschrift US 7,054,143 B2 ist eine Mittelspannungsschaltanlage bekannt, bei der unter Druck stehende Gase über einen deckenseitig an dem Gehäuse der Schaltanlage angebrachten Ableitkanal abgeführt werden.

Aus der Druckschrift WO98/19377 ist eine Mittelspannungsschaltanlage bekannt, bei der eine Absorbereinrichtung für Störlichtbögen vorgesehen ist, wobei die Absorbereinrichtung an dem rückseitigem und/oder seitlichem Bereich der Mittelspannungssehaltanlage ausgeführt ist, um unter Druck stehende Gase oder Zersetzungsprodukte abzuleiten.

Weiterhin ist aus der Druckschrift EP 1 477 668 A1 bekannt, ein Windturbinenleistungsmodul in einem Turm einer Windenergieanlage anzuordnen, wobei das Windturbinenleistungsmodul auf dem Fundament des Turmes angeordnet ist.

Das Dokument DE 10310036 A1 offenbart eine Winkraftanlage gemäß dem Oberbegriff des Anspruchs 1.

Es ist Aufgabe der vorliegenden Erfindung eine Windenergieanlage, insbesondere eine Offshore-Windenergieanlage mit einer Schaltanlage, vorzusehen, bei der eine Druckentlastung durchgeführt wird und vermieden wird, dass im Fall eines Auftretens eines Lichtbogens Gase und Zersetzungsprodukte im Inneren der geschlossenen Umgebung verbleiben und dass weiterhin die Struktur der Außenhülle nicht geschwächt wird.

Diese Aufgabe wird durch die Windenergieanlage nach Anspruch 1 gelöst.

Weitere vorteilhafte Ausgestaltungen sind in den abhängigen Ansprüchen angegeben.

Die Erfindung betrifft eine Windenergieanlage zum Bereitstellen von elektrischer Energie. Die Windenergieanlage umfasst:
- einen Turm mit einem Turminnenraum;
- eine Schaltanlage, insbesondere eine Mittelspannungsschaltanlage, zum Schalten eines elektrischen Stromes, wobei die Schaltanlage in einem Gehäuse im Turminnenraum angeordnet ist;
- eine von dem Turminnenraum separate Ableitkammer;
   wobei der Turminnenraum durch einen Trennboden begrenzt wird, wobei die Ableitkammer durch den Trennboden und einem Innenvolumen eines Fundaments, auf dem der Turm aufgesetzt ist, definiert ist,
- eine Druckentlastungseinrichtung, die zwischen dem Inneren des Gehäuses und der Ableitkammer verbunden ist, um bei einem Druckunterschied zwischen dem Inneren des Gehäuses der Schaltanlage und der Ableitkammer auszulösen, so dass ein Überdruck in die Ableitkammer abgebaut werden kann, und dass die Schaltanlage mit einer Einrichtung versehen ist, um einen durch Schalten des elektrischen Stromes bewirkten Lichtbogen zu löschen, und dass die Druckentlastungseinrichtung in dem Trennboden in dem Bereich angeordnet ist, über dem das Gehäuse der Schaltanlage angeordnet ist.

Eine Idee der obigen Windenergieanlage besteht darin, eine Druckentlastung der Schaltanlage vorzusehen, durch die z.B. bei Auftreten eines Fehlers entstehenden Gase und Zersetzungsprodukte in die Ableitkammer abgeführt werden. Die Ableitkammer ist im Wesentlichen von dem Turminnenraum, in dem sich die Schaltanlage befindet, getrennt und weist vorzugsweise ein ausreichend hohes Volumen auf, die unter Druck stehenden Gase aufzunehmen. Dadurch kann erreicht werden, dass ein Ableiten der Gase in den Turminnenraum vermieden werden kann, so dass dort angeordnete zusätzliche Einrichtungen bzw. dort befindliche Personen durch die häufig toxischen Gase nicht geschädigt werden können. Darüber hinaus hat die obige Windenergieanlage den Vorteil, dass auf einen Druckentlastungskanal durch die Außenwand des Turms verzichtet werden kann, der die strukturelle Stabilität der Außenwand beeinträchtigen könnte.

Weiterhin kann die Schaltanlage mit einer Einrichtung versehen sein, um einen durch Schalten des elektrischen Stromes bewirkten Lichtbogen zu löschen.

Gemäß der Erfindung wird der Turminnenraum durch einen Trennboden begrenzt, wobei die Ableitkammer durch den Trennboden und einem Innenvolumen eines Fundaments, auf dem der Turm aufgesetzt ist, definiert ist.

Insbesondere kann die Druckentlastungseinrichtung in dem Trennboden in dem Bereich angeordnet sein, über dem das Gehäuse der Schaltanlage angeordnet ist.

Es kann weiterhin vorgesehen sein, dass die Schaltanlage mehrere Schalteinrichtungen aufweist, die über jeweiligen Kabelanschlussräumen angeordnet sind, wobei das Gehäuse der Schaltanlage mit Hilfe eines Rahmens mit dem Bereich des Trennbodens verbunden ist, wobei der Rahmen einen Gasableitungskanal bildet, um Gase und/oder Zersetzungsprodukte, die durch die Kabelanschlussräume geführt werden, der Druckentlastungseinrichtung zuzuführen.

Gemäß einer Ausführungsform kann die Druckentlastungseinrichtung eine Verschlussplatte aufweisen, um eine Öffnung zu verschließen, wobei die Verschlussplatte durch Halteelemente gehalten wird, die bei einer vorbestimmten Bruchlast nachgeben, wodurch die Verschlussplatte die Öffnung freigibt.

Weiterhin kann die Verschlussplatte über ein Erdungsleiter mit einem Rahmen, in dem die Öffnung vorgesehen ist, verbunden sein.

Weiterhin kann das Volumen der Ableitkammer mindestens das 10-fache des Volumens des Gehäuses aufweisen.

Gemäß einem Aspekt kann Windenergieanlage als Offshore-Windenergieanlage ausgebildet sein.

Bevorzugte Ausführungsformen werden nachfolgend in Verbindung mit den beigefügten Zeichnungen näher erläutert. Es zeigen:
- Figur 1: eine schematische Darstellung einer Offshore-Windenergieanlage mit einer Schnittansicht eines Basisbereichs, in dem eine Mittelspannungsschaltanlage vorgesehen ist;
- Figur 2: eine detaillierte Darstellung des Bereichs des Innenraumes der Windenergieanlage, in dem die Schaltanlage angeordnet ist, in einer Vorderansicht;
- Figur 3: eine detaillierte Darstellung des Bereichs des Innenraumes der Windenergieanlage, in dem die Schaltanlage dargestellt ist, in einer Seitenansicht;
- Figur 4: eine Schnittansicht in der Ebene des Trennbodens, der den Innenraum des Turms der Windenergieanlage und einen Ableitbereich von einander trennt;
- Figur 5a-5b: verschieden Ansichten einer Druckentlastungsplatte zur Verwendung in der Anordnung der Figuren 1-4.

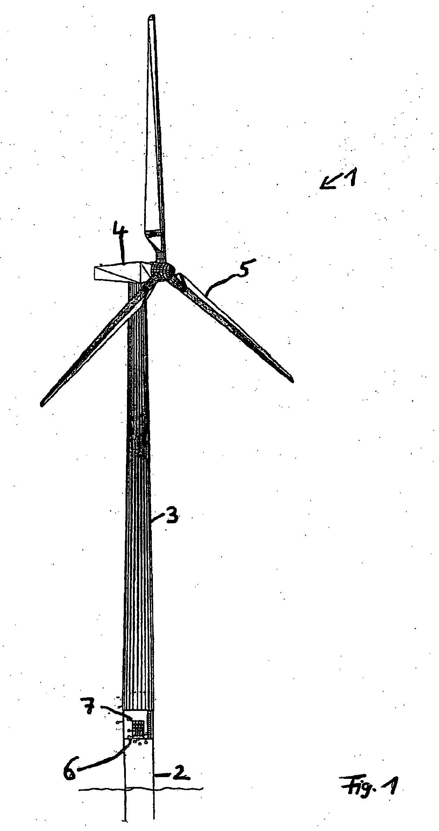

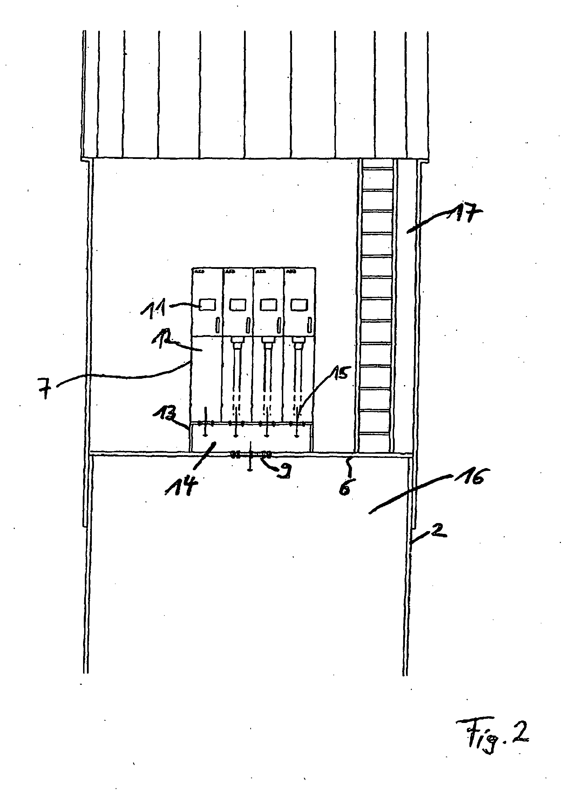

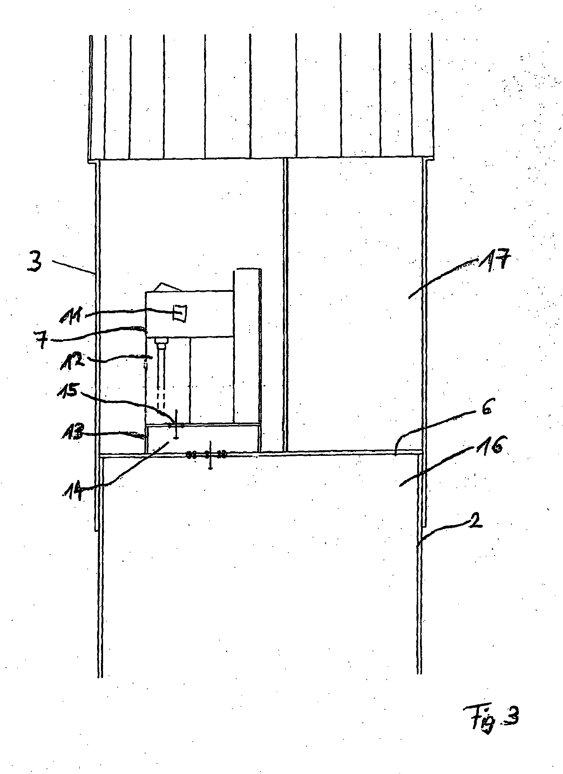

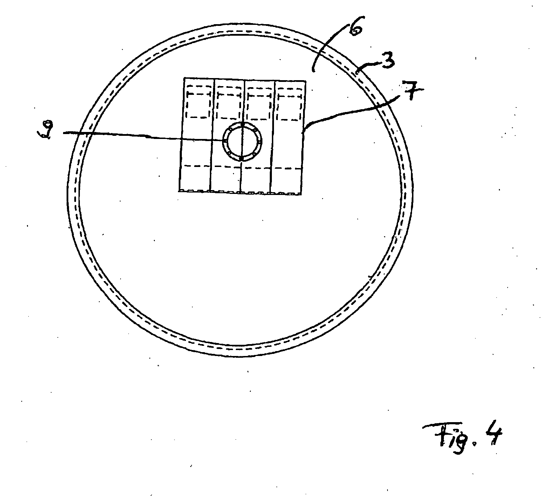

In den Figuren 1 bis 4 sind verschiedene Ansichten einer Offshore-Windenergieanlage 1 dargestellt. Die Windenergieanlage 1 umfasst ein Fundament 2, auf dem ein sich im Wesentlichem nach oben verjüngender, zylinderförmiger Turm 3 aufgesetzt ist. An der dem Fundament 2 gegenüberliegenden oberen Ende des Turmes 3 ist ein um die senkrechte Achse des zylinderförmigen Turmes 3 beweglicher Generatorkopf 4 angeordnet, an dem ein mehrflügeliges Windrad 5 angeordnet ist.

Das Fundament der Windenergieanlage 1 ist in den Meeresboden eingerammt, eingebracht oder aufgesetzt und ragt über den Meeresspiegel 10 um einige Meter in die Höhe, beispielsweise um 6 bis 7 Meter. Das Fundament 2 kann aus Stahl oder einem wasserfestem Beton oder dergleichen ausgebildet sein.

Der Turm 3 ist auf dem über den Meeresspiegel herausragenden Fundament 2 fest und wasserdicht verbunden und stellt im Wesentlichen eine Verlängerung des Fundamentes 2 in senkrechter Richtung dar. Das Fundament 2 kann einen Hohlraum aufweisen, der an seiner Oberseite durch einen Trennboden 6 abgeschlossen ist. Der Trennboden 6 dient gleichzeitig als Bodenabschluss für den Turminnenraum 17 des Turms 3.

Auf dem Trennboden 6 ist eine Mittelspannungsanlage 7 angeordnet, die zum Schalten der durch den Generatorkopf 4 erzeugten elektrischen Energie, zum Wandeln des generierten Stroms und zum sonstigen Steuern der elektrischen Energie Lastschalter aufweist. Die Mittelspannungsschaltanlage kann weiterhin mit einem Lasttrenner versehen sein, der es ermöglicht, einzelne Kabelstrecken als Verbindung zwischen mehreren Windenergieanlagen z.B. im Falle eines Fehlers oder bei einer Wartung herauszurennen, ohne dass man funktionsfähige Windenergieanlagen vom Mittelspannungsnetz, das die Windenergieanlagen eines Windparks miteinander verbindet, trennen muss.

Beim Schalten der Lastschalter unter Last treten in der Regel Lichtbögen auf, die in sogenannten Lichtbogenkammern gelöscht werden. Das Löschen des Lichtbogens erfolgt beispielsweise durch Gas, Druckluft oder Flüssigkeiten. Bei einem Fehler kann es in der Mittelspannungsanlage 7 zu einem Auslösen der Lastschalter kommen, so dass sich ein sogenannter Störlichtbogen ausbildet. Diese Störlichtbögen bewirken hohe Temperaturen und führen in Verbindung mit den zur Löschung vorgesehenen Gasen oder Flüssigkeiten zu toxischen oder schädlichen Gasen bzw. Zersetzungsprodukten. Durch chemische Reaktionen und durch die Erwärmung der Gase im Inneren des Gehäuses der Mittelspannungsanlage 7 kommt es dort zu einem hohen Druck.

Die Mittelspannungsanlage 7 selbst weist ein Gehäuse auf, dessen Inneres im Wesentlichen von der Umgebung der Mittelspannungsanlage 7 gasdicht abgetrennt ist bzw. abgedichtet ist. Die bei Auftreten eines Störlichtbogens entstehenden toxische oder schädliche Gase bzw. Zersetzungsprodukte erzeugen einen erhöhten Druck im Inneren des Gehäuses. Dieser Überdruck muss abgebaut werden, um einerseits das Gehäuse der Mittelspannungsanlage 7 gegen eine Beschädigung zu schützen und um andererseits den Zugang zur Mittelspannungsanlage 7 zu ermöglichen, so dass Maßnahmen ergriffen werden können, die Mittelspannungsanlage 7 nach einem Störlichtbogenfall wieder in Betrieb zu nehmen.

Zum Ableiten der toxischen oder schädlichen Gasen bzw. Zersetzungsprodukte ist eine Druckentlastungsvorrichtung 9 vorgesehen. Die Druckentlastungsvorrichtung 9 ist so konstruiert, dass bei Auftreten eines Überdrucks im Inneren des Gehäuses der Mittelspannungsschaltanlage 7 dieser in eine von dem Turminnenraum 17 separate bzw. abgetrennte Ableitkammer 16 abgeleitet wird. Eine solche Ableitkammer 16 kann beispielsweise mit dem Trennboden 6 und dem Fundament 2 unterhalb des Turminnenraums 17 gebildet werden. Die so gebildete Ableitkammer 16 weist üblicherweise einen hohes Volumen im Vergleich zu dem Volumen des Gehäuseinneren der Mittelspannungsschaltanlage 7 auf (z.B. ein um den Faktor 10 oder mehr höheres Volumen) und eine ausreichende Wandstärke, so dass die in der Mittelspannungsanlage 7 gebildeten Gase und Zersetzungsprodukte sowie ein erhöhter Druck aufgenommen werden können.

Die Ableitkammer 16, die in dem Fundament 2 gebildet ist, weist bei einer Offshore-Windenergieanlage auf Grund der Höhe des Fundaments 2 über dem Meeresspiegel von 6 bis 7 Metern und seines Durchmessers von ca. 4 m ein ausreichendes Volumen auf, um die unter Druck stehenden Gase aus dem Gehäuseinneren der Mittelspannungsschaltanlage 7 aufzunehmen. Zudem ist das Fundament 2 mit einem Stahlrohr oder als Betonfundament mit großer Wandstärke gebildet, die ohne weitere Probleme dem entstehenden Druck standhalten kann.

Weiterhin ist diese Ableitkammer 16 in der Regel ungenutzt und für Personen nicht zugänglich und darüber hinaus frei von sonstigen Einrichtungen, die von den dahin abgeleiteten Gasen beeinträchtigt werden könnten. Die Mittelspannungsanlage 7 weist in der Regel einen Aufbau auf, bei der entsprechende Schalteinrichtungen 11 mit den Lastschaltern und den Löschkammern oberhalb eines Kabelanschlussraumes 12, vorgesehen sind. Entsteht im Störlichtbogenfall durch Verdampfen von Material und durch eine Hitzeentwicklung schädliche Gase und Zersetzungsprodukte mit Überdruck, so können diese über den Kabelanschlussraum 12 zum Boden der Mittelspannungsschaltanlage 7 abgeführt werden.

Es kann ein gasdicht auf dem Trennboden 6 angeordneter Grundrahmen 13 vorgesehen sein, der im Wesentlichen die Querschnittsfläche des Gehäuses der Mittelspannungsschaltanlage 7 aufweisen kann. Auf den Grundrahmen 13 ist das Gehäuse gasdicht aufgesetzt, so dass der Grundrahmen 13 die durch die Kabelanschlussräume 12 und die an ihrem unteren Ende vorgesehenen Verbindungsöffnungen 15 geleiteten Gase aufnehmen kann und so einen Gasableitungskanal 14 für die aus den mehreren Schalteinrichtungen 11 abzuleitenden Gase bildet.

Der Grundrahmen 13 ist über einer Druckentlastungseinrichtung 9 im Trennboden 6 angeordnet, so dass im Fehlerfall der in dem Gasableitungskanal 14 vorherrschende Überdruck die Druckentlastungseinrichtung 9 beaufschlagt und gegebenenfalls auslöst.

Anstatt die Gase und Zersetzungsprodukte durch die Kabelanschlussräume 12 und gegebenenfalls durch den Gasableitungskanal 14 zu der Druckentlastungseinrichtung 9 zu leiten, kann auch eine entsprechende Gasleitung zwischen dem Innenraum des Gehäuses, in dem die Schalteinrichtung vorgesehen ist und der Druckentlastungseinrichtung 9 vorgesehen sein. Die Gasleitung kann eine Öffnung in der Seitenwand oder auf der Oberseite des Gehäuses und die Druckentlastungseinrichtung 9 miteinander verbinden.

Die Druckentlastungseinrichtung 9 kann beispielsweise eine Berstscheibe oder Druckentlastungsklappe umfassen. Eine Berstscheibe ist eine Scheibe, die im nichtausgelösten Zustand das Volumen des Gehäuseinneren der Mittelspannungsschaltanlage 7 und das Volumen der Ableitkammer 16 im Fundament voneinander gasdicht trennt und bei Überschreiten eines Druckunterschieds zwischen den Volumina, der einem definierten Auslösedruck entspricht, zerbricht.

Bei einer Druckentlastungsklappe handelt es sich um eine fixierte, häufig schwenkbar angebrachte Klappe, die eine Öffnung zwischen den Volumina verschließt. Die Klappe wird durch einen Auslösemechanismus in der geschlossenen Stellung gehalten. Der Auslösemechanismus ist so gestaltet, dass er die Klappe, sobald der Druckunterschied, der einem definierten Auslösedruck entspricht, einen vorgegebenen Schwellenwert übersteigt, freigibt.

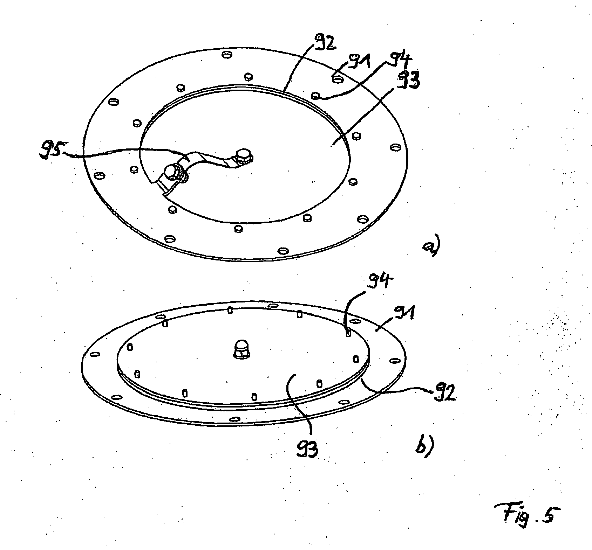

In den Figuren 5a und 5b ist eine weitere Möglichkeit zur Ausbildung einer Druckentlastungseinrichtung 9 dargestellt. Die Druckentlastungseinrichtung 9 der Figuren 5a bis 5c zeigt einen im Wesentlichen scheibenförmigen Rahmen 91, mit einer Mittenöffnung 92 in der eine Verschlussplatte 93 befestigt ist. Die Verschlussplatte 93 ist mit Hilfe von geeigneten Halteelemente 94, wie z.B. Schraub- oder Steckverbindungen an dem Rahmen 91 befestigt, die Sollbruchstellen darstellen. Die Halteelemente 94 sind so ausgebildet, dass diese bei einer bestimmten Kraft nachgeben und sich dadurch die Verschlussplatte 93 von dem Rahmen löst und eine Öffnung ausbildet, durch die die unter Druck stehenden Gase und Zersetzungsprodukte entweichen können. Die bestimmte Kraft entsteht, wenn ein Druckunterschied auf die Verschlussplatte 93 wirkt.

Eine solche Ausbildung hat den Vorteil, dass der Rahmen 91 und die Verschlusspatte 93 nicht beschädigt werden, so dass zur Wiederinbetriebnahme der Druckentlastungseinrichtung 9 dann lediglich neue Halteelemente 94 benötigt werden, mit denen die Verschlusspatte 93 an dem Rahmen befestigt wird. Durch Auswahl der Halteelemente 94 kann der Auslösedruck über die Wahl einer entsprechenden Bruchlast der Halteelemente 94 ausgewählt werden.

Zwischen dem Rahmen 91 und der Verschlussplatte 93, kann in geeigneter Weise ein Erdungskabel 95 vorgesehen werden, das z.B. durch Schraubverbindungen, sowohl an der Verschlussplatte 93 als auch an dem Rahmen 91 befestigt ist. Neben der Erdung der Verschlussplatte 93 kann das Erdungskabel 95 somit bei Auslösen der Druckentlastungseinrichtung 9 gleichzeitig verhindern, dass die Verschlussplatte 93 sich vollständig von dem Rahmen 91 löst und aufwendig aus der Ableitkammer 16 geborgen werden muss.

### Bezugszeichenliste

- 1: Windenergieanlage
- 2: Fundament
- 3: Turm
- 4: Generatorkopf
- 5: Windturbine
- 6: Trennboden
- 7: Mittelspannungsschaltanlage
- 9: Druckentlastungseinrichtung
- 11: Schalteinrichtung
- 12: Kabelanschlussraum
- 13: Grundrahmen
- 14: Gasableitungskanal
- 15: Verbindungsöffnungen
- 16: Ableitkammer
- 17: Turminnenraum
- 91: Rahmen
- 92: Öffnung
- 93: Verschlussplatte
- 94: Halteelement
- 95: Erdungskabel

## Patentansprüche

1. Windenergieanlage (1) zum Bereitstellen von elektrischer Energie, umfassend:
- einen Turm (3) mit einem Turminnenraum (17);
- eine Schaltanlage (7), insbesondere eine Mittelspannungsschaltanlage, zum Schalten eines elektrischen Stromes, wobei die Schaltanlage (7) in einem Gehäuse im Turminnenraum (17) angeordnet ist; **dadurch gekennzeichnet dass** die Winderenergieanlage umfasst,
- eine von dem Turminnenraum (17) separate Ableitkammer (16);
wobei der Turminnenraum durch einen Trennboden begrenzt wird, wobei die Ableitkammer (2) durch den Trennboden (6) und einem Innenvolumen eines Fundaments (2), auf dem der Turm (3) aufgesetzt ist, definiert ist,
- eine Druckentlastungseinrichtung (9), die zwischen dem Inneren des Gehäuses und der Ableitkammer (16) verbunden ist, um bei einem Druckunterschied zwischen dem Inneren des Gehäuses der Schaltanlage (7) und der Ableitkammer (16) auszulösen, so dass ein Überdruck in die Ableitkammer (16) abgebaut werden kann, und dass die Schaltanlage (16) mit einer Einrichtung versehen ist, um einen durch Schalten des elektrischen Stromes bewirkten Lichtbogen zu löschen, und dass die Druckentlastungseinrichtung (9) in dem Trennboden (6) in dem Bereich angeordnet ist, über dem das Gehäuse der Schaltanlage (7) angeordnet ist.

2. Windenergieanlage (1) nach Anspruch 1, wobei die Schaltanlage (7) mehrere Schalteinrichtungen aufweist, die über jeweiligen Kabelanschlussräumen (12) angeordnet sind, wobei das Gehäuse der Schaltanlage (7) mit Hilfe eines Rahmens mit dem Bereich des Trennbodens (6) verbunden ist, wobei der Rahmen einen Gasableitungskanal (14) bildet, um Gase und/oder Zersetzungsprodukte, die durch die Kabelanschlussräume (12) geführt werden, der Druckentlastungseinrichtung (9) zuzuführen.

3. Windenergieanlage (1) nach einem der Ansprüche 1 bis 2, wobei die Druckentlastungseinrichtung (9) eine Verschlussplatte (93) aufweist, um eine Öffnung (92) zu verschließen, wobei die Verschlussplatte (93) durch Halteelemente (94) gehalten wird, die bei einer vorbestimmten Bruchlast nachgeben, wodurch die Verschlussplatte (93) die Öffnung freigibt.

4. Windenergieanlage (1) nach Anspruch 3, wobei die die Verschlussplatte (93) über ein Erdungsleiter (95) mit einem Rahmen (92), in dem die Öffnung (93) vorgesehen ist, verbunden ist.

5. Windenergieanlage (1) nach einem der Ansprüche 1 bis 4, wobei das Volumen der Ableitkammer (16) mindestens das 10-fache des Volumens des Gehäuses aufweist.

6. Windenergieanlage (1) nach einem der vorangehenden Ansprüche, die als Offshore-Windenergieanlage ausgebildet ist.

## Claims

1. Wind turbine (1) for providing electrical energy, comprising:
- a tower (3) with a tower interior (17);
- switchgear (7), in particular medium-voltage switchgear, for switching an electric current, the switchgear (7) being arranged in a housing in the tower interior (17); **characterized in that** the wind turbine comprises:
- a discharge chamber (16) separate from the tower interior (17);
- the tower interior being delimited by a partition, the discharge chamber (2) being defined by the partition (6) and an internal volume of a foundation (2) on which the tower (3) stands,
- a pressure-relief device (9) which is connected between the inside of the housing and the discharge chamber (16) so that, in the event of a difference in pressure between the inside of the housing of the switchgear (7) and the discharge chamber (16), it triggers the release of an excess pressure into the discharge chamber (16), and **in that** the switchgear (16) is provided with a device for extinguishing an arc caused by the switching of the electric current, and **in that** the pressure-relief device (9) is arranged in the partition (6) in the region above which the housing for the switchgear (7) is arranged.

2. Wind turbine (1) according to Claim 1, wherein the switchgear (7) has multiple switching devices which are arranged above respective cable connection spaces (12), the housing for the switchgear (7) being connected to the region of the partition (6) by means of a frame, the frame forming a gas discharge duct (14) for feeding gases and/or decomposition products, which are passed through the cable connection spaces (12), to the pressure-relief device (9).

3. Wind turbine (1) according to one of Claims 1 to 2, wherein the pressure-relief device (9) has a sealing plate (93) for sealing an opening (92), the sealing plate (93) being retained by retaining elements (94) which yield under a predetermined breaking load, whereupon the sealing plate (93) unblocks the opening.

4. Wind turbine (1) according to Claim 3, wherein the sealing plate (93) is connected via a grounding conductor (95) to a frame (92) in which the opening (93) is provided.

5. Wind turbine (1) according to one of Claims 1 to 4, wherein the volume of the discharge chamber (16) is at least 10 times the volume of the housing.

6. Wind turbine (1) according to one of the preceding claims, which is designed as an offshore wind turbine.

## Revendications

1. Éolienne (1) destinée à fournir de l'énergie électrique, comprenant :
- une tour (3) comprenant un espace interne de tour (17) ;
- une installation de commutation (7), en particulier une installation de commutation moyenne tension, pour commuter un courant électrique, l'installation de commutation (7) étant disposée dans un boîtier dans l'espace interne de tour (17) ; **caractérisée en ce que** l'éolienne comprend :
- une chambre de dérivation (16) séparée de l'espace interne de tour (17) ;
l'espace interne de tour étant limité par un fond de séparation, la chambre de dérivation (2) étant définie par le fond de séparation (6) et un volume interne d'une fondation (2) sur laquelle est posée la tour (3),
- un dispositif de détente de pression (9) qui est connecté entre l'intérieur du boîtier et la chambre de dérivation (16), afin de se déclencher en cas de différence de pression entre l'intérieur du boîtier de l'installation de commutation (7) et la chambre de dérivation (16) afin de pouvoir supprimer une surpression dans la chambre de dérivation (16), et **en ce que** l'installation de commutation (16) est pourvue d'un dispositif pour éteindre un arc électrique provoqué par la commutation du courant électrique, et **en ce que** le dispositif de détente de pression (9) est disposé dans le fond de séparation (6) dans la région sur laquelle est disposé le boîtier de l'installation de commutation (7).

2. Éolienne (1) selon la revendication 1, dans laquelle l'installation de commutation (7) présente plusieurs dispositifs de commutation qui sont disposés sur des espaces de raccordement de câble respectifs (12), le boîtier de l'installation de commutation (7) étant connecté à l'aide d'un cadre à la région du fond de séparation (6), le cadre formant un canal de dérivation de gaz (14) afin d'acheminer au dispositif de détente de pression (9) les gaz et/ou les produits de décomposition qui sont guidés à travers les espaces de raccordement de câble (12).

3. Éolienne (1) selon l'une quelconque des revendications 1 à 2, dans laquelle le dispositif de détente de pression (9) présente une plaque de fermeture (93) afin de fermer une ouverture (92), la plaque de fermeture (93) étant retenue par des éléments de retenue (94) qui cèdent dans le cas d'une charge de rupture prédéfinie, de sorte que la plaque de fermeture (93) libère l'ouverture.

4. Éolienne (1) selon la revendication 3, dans laquelle la plaque de fermeture (93) est connectée par le biais d'un conducteur de mise à la terre (95) à un cadre (92) dans lequel est prévue l'ouverture (93).

5. Éolienne (1) selon l'une quelconque des revendications 1 à 4, dans laquelle le volume de la chambre de dérivation (16) est d'au moins 10 fois le volume du boîtier.

6. Éolienne (1) selon l'une quelconque des revendications précédentes, réalisée sous forme d'éolienne offshore.
